**Europäisches Patentamt**

**European Patent Office**

**Office européen des brevets**

(19)

(11) Veröffentlichungsnummer: **0 069 353**
**A1**

(12) # EUROPÄISCHE PATENTANMELDUNG

(21) Anmeldenummer: 82105883.1

(22) Anmeldetag: 01.07.82

(51) Int. Cl.$^3$: **C 02 F 3/00**
**C 02 F 3/30**

(30) Priorität: 04.07.81 DE 3126412

(43) Veröffentlichungstag der Anmeldung:
**12.01.83** Patentblatt **83/2**

(84) Benannte Vertragsstaaten:
**IT**

(71) Anmelder: **Menzel GmbH. + Co.**
**Hedelfinger Strasse 95**
**D-7000 Stuttgart 60(DE)**

(72) Erfinder: **Zink, Jürgen**
**Schilfweg 3**
**D-7000 Stuttgart 70(DE)**

(74) Vertreter: **Grupe, Peter, Dipl.-Ing.**
**Patentanwaltsbüro**
**Tiedtke-Bühling-Kinne-Grupe-Pellmann-Grams**
**Bavariaring 4**
**D-8000 München 2(DE)**

(54) Verfahren zur Behandlung einer Flüssigkeit.

(57) Bei diesem Verfahren zur Behandlung einer Flüssigkeit, insbesondere Abwasser, wird letzteres einer Nitrifikationsphase (N) und einer Denitrifikationsphase (D) unterworfen, indem der Sauerstoffanteil im Abwasser gesteuert bzw. geändert wird.

Zur Erzielung einer den Erfordernissen entsprechenden variablen Zeitsteuerung der Denitrifikationsphase (D) mittels einer Sauerstoffmessung im Abwasser die Sauerstoffänderungsfunktion (S) im Abklingbereich (Ab) der Nitrifikationsphase (N) festgestellt. Aus dem Kurvenverlauf bzw. der Charakteristik der Sauerstoffänderungsfunktion (S) wird ein zugeordneter Zeitbedarf für die Denitrifikationsphase (D) ermittelt. Der ermittelte Zeitbedarf wird der Denitrifikationsphase (D) ab Erreichung eines Schwellwertes (Sw) des Sauerstoffanteils als Zeitglied (Z) vorgegeben.

EP 0 069 353 A1

TIEDTKE – BÜHLING – KINNE

GRUPE – PELLMANN – GRAMS

Patentanwälte und
Vertreter beim EPA
Dipl.-Ing. H. Tiedtke
Dipl.-Ing. G. Bühling
Dipl.-Ing. R. Kinne
Dipl.-Ing. P. Grupe
Dipl.-Ing. B. Pellmann
Dipl.-Ing. K. Grams

Bavariaring 4, Postfach 20 24 0
8000 München 2
Tel.: 0 89 - 53 96 53
Telex: 5-24 845 tipat
cable: Germaniapatent Münche

0069353

1. Juli 1982

EP 2294

Menzel GmbH & Co.

Stuttgart

## Verfahren zur Behandlung einer Flüssigkeit

Die Erfindung betrifft ein Verfahren zur Behandlung
einer Flüssigkeit, insbesondere Abwasser, das durch
Steuerung des Sauerstoffanteils einer Nitrifikationsphase und einer Denitritfikationsphase unterworfen
wird.

Zur Abwasseraufbereitung ist es bekannt, die Steuerung
eines Behandlungsvorgangs wie der Denitrifikationsphase
durch entsprechende Zeitintervallvorgaben zu automatisieren . Hierbei wird bemängelt, daß bei einem derartigen Verfahrensablauf zum Teil erhebliche Schwankungen
auftreten können, wodurch die Abwasserbehandlung oftmals stark   beeinträchtigt wird, so daß vielfach
keine zufriedenstellenden Aufbereitungsergebnisse erzielt werden. Derartige Schwankungen werden insbesondere
durch unterschiedliche Zuströmmengen des Abwassers oder
auch durch      wechselnde Abwasserzusammensetzungen
verursacht. Da nach dem Abschalten der Sauerstoffzufuhr in das Abwasser zur Überwechslung in die Denitrifikationsphase die Sauerstoffzehrung in diesem Abklingbereich eine Exponentialfunktion  darstellt, ist die
Zehrungsgeschwindigkeit zunächst verhältnismäßig hoch,
wird dann aber immer kleiner, so daß im niedrigen Sauerstoffanteilsbereich um ca. 0,5 mg pro Liter die Zehrungs- .

Deutsche Bank (München) Kto. 51/61 070          Dresdner Bank (München) Kto. 3939 844          Postscheck (München) Kto. 670-43-804

geschwindigkeit schon nahe Null sein kann. Daraus ergibt sich, daß eine Steuerung insbesondere der Denitrifikation nach vorgegebenen Zeitintervallen zur Behandlung des Abwassers für einen optimalen Betriebsablauf unzureichend ist.

Demgemäß besteht die Aufgabe der Erfindung darin, ein Verfahren der eingangs beschriebenen Art zur Behandlung einer Flüssigkeit, insbesondere Abwasser, so zu verbessern, daß eine weitgehende Feinanpassung der Behandlungsphasen entsprechend den jeweils zugeleiteten und sich ändernden Abwasserkriterien möglich ist.

Diese Aufgabe wird erfindungsgemäß dadurch gelöst, daß mittels einer Sauerstoffmessung im Abwasser die Sauerstoffänderungsfunktion im Abklingbereich (Sauerstoffreduktion) der Nitrifikationsphase festgestellt und aus dem Kurvenverlauf bzw. der Charakteristik der Sauerstoffänderungsfunktion ein zugeordneter Zeitbedarf für die Denitrifikationsphase ermittelt und letzterer als bei Erreichung eines Schwellwertes des Sauerstoffanteils einsetzendes Zeitglied vorgegeben wird.

Ein mit der Erfindung erzielter Vorteil besteht darin, daß die Sauerstoffänderungsfunktion nach dem Abschalten der Begasung während der Nitrifikationsphase zur Bestimmung der Denitrifikationsphase herangezogen wird, denn hier besteht ein unmittelbarer Zusammenhang, wodurch eine korrekte und individuelle Phasensteuerung möglich ist. Ist der Kurvenverlauf der Sauerstoffabnahme im Abwasser nach dem Abschalten der Belüftung relativ steil, so ist eine starke Sauerstoffzehrung durch den Belebtschlamm im Abwasser gegeben. Demnach ist auch der Zeitbedarf für die von einem bestimmten Schwellwert an einsetzende Denitrifikationsphase entsprechend kurz. Bei langsamer Sauerstoffzehrung weist die Sauerstoffänderungsfunktion einen verhältnismäßig flach abfallenden Kurvenverlauf auf, woraus sich ergibt, daß die Denitrifikationsphase über einen entsprechend lang gewählten Zeitraum durchzuführen ist, was erfindungsgemäß selbsttätig steuernd erfolgt. Es ist somit eine individuelle, den unterschiedlichen Erfordernissen weitgehend optimal genügende Steuerung der Behandlungsphasen des Abwassers gegeben.

Bevorzugte Ausgestaltungen und vorteilhafte Weiterbildungen der Erfindung sind den Merkmalen der Unteransprüche und der Beschreibung zu entnehmen.

Darüber hinaus ist es zur Lösung der zugrunde liegenden Aufgabe  - eventuell selbst in Kombination mit dem vorbeschriebenen Lösungsvorschlag -  auch möglich, eine Sauerstoffänderungsfunktion im Anfahrbereich (Sauerstoffzufuhr) der Nitrifikationsphase mittels einer Sauerstoffmessung im Abwasser festzustellen. Aus dem Kurvenverlauf bzw. der Charakteristik der ermittelten Sauerstoffänderungsfunktion kann ein zugeordneter Zeitbedarf für die Denitrifikationsphase ermittelt werden. Der so über die Sauerstoffänderungsfunktion ermittelte zugehörige Zeitbedarf wird dabei als Zeitglied vorgegeben, welches bei Erreichung eines Schwellwertes des Sauerstoffanteils am Ende der Nitrifikationsphase einsetzt. Es ist somit erfindungsgemäß auch möglich, die Dauer der Denitrifikationsphase über die Sauerstoffänderungsfunktion entsprechend der unterschiedlichen Zehrung im Abwasser während der Sauerstoffzugabe für die Nitrifikationsphase zeiteinheitlich individuell anzupassen. Weist das im Becken befindliche Abwasser einen verhältnismäßig hohen Reinheitsgrad auf, so wird der Kurvenanstieg der Sauerstoffänderungsfunktion während der Sauerstoffzugabe sehr . teil ausgeprägt sein, während bei stark verschmutztem Abwasser ein entsprechend flacherer Anstieg vorliegt. Aufgrund dieser in der Praxis stark unterschiedlichen Änderungsfunktionen wird die zutreffende Zeiteinheit für die Denitrifikationsphase ermittelt und genau vorgegeben, so daß im wesentlichen die gleichen vorbeschriebenen Vorteile gegeben sind.

Zur Bestimmung der jeweils charakteristischen Sauerstoffänderungsfunktion kann es vorteilhaft sein, die Sauerstoffmessung nur kurzzeitig als begrenzte Teilzeitmessung im Abklingbereich oder auch im Anfahrbereich der Nitrifikationsphase vorzunehmen. Dazu kann der Meßvorgang außerdem zu einem vorbestimmten Zeitpunkt begonnen und nach Ablauf der kurzen Teilzeitmessung abgebrochen werden. Die so ermittelten Meßdaten der Sauerstoffänderungsfunktion werden vorteilhaft über einen elektronischen Rechner hochgerechnet, wodurch eine große Genauigkeit mit nur geringer Toleranzbreite erreicht wird. Über die hochgerechneten Meßdaten wird zweckmäßig vom gleichen Rechner unmittelbar der entsprechende Zeitbedarf bzw. das Zeitglied für die Denitrifikationsphase ermittelt und vorgegeben. Die Teilzeitmessung der Sauerstoffänderungsfunktion erfolgt sowohl beim Abklingbereich als auch beim Anfahrbereich günstig im Bereich der stärksten Kurvenkrümmung der Sauerstoffänderungsfunktion und wird im Abklingbereich vorzugsweise nahe über oder unter einem die Denitrifikationsphase einleitenden unteren Schwellwert durchgeführt, der etwa bei 0,5 mg O$_2$ pro Liter Abwasser liegt.

Es kann auch vorteilhaft sein, eine Mengenänderungsfunktion der Abwasserzufuhr im Becken mittels einer entsprechenden Mengenmessung festzustellen. Aus der festgestellten Mengenänderungsfunktion kann ein zugeordneter Zeitbedarf für die Denitrifikationsphase ermittelt und vorgegeben werden. Ebenso kann dabei auch die Nitrifikationsphase mit einbezogen werden, so daß die Zeiteinheiten für die Nitrifikation und die Denitrifikation ebenfalls über die schwankende Abwasserzufuhr geregelt werden können. Es lassen sich somit weitgehend gleiche Intervalle mit allerdings unterschiedlicher Länge sowohl bei großer als auch bei kleiner Abwasserzufuhr erzielen, wodurch ein hohes durchschnittliches Leistungsniveau erreicht wird. Die Messung der Mengenänderungsfunktion bezüglich der Abwasserzufuhr kann vorteilhaft als kurzzeitige Intervallmessung durchgeführt werden. Die so ermittelten Meßdaten der Mengenänderungsfunktion können zur Zeitbedarfsbestimmung der Nitri-fikations- und/oder Denitrifikationsphase elektro-nisch hochgerechnet werden.

Weiterhin kann es günstig sein, nach der Abschaltung der Belüftung, also im Abklingbereich des Sauerstoffanteils von der Nitrifikationsphase zur Denitrifikationsphase, eine kleine Sauerstoff- bzw. Luftsauerstoffmenge fortlaufend ins Abwasser einzubringen. Ledi-glich der größere Teil des Sauerstoffs wird hierbei somit abgeschaltet. Dadurch wird erreicht, daß die Sauerstoffänderungsfunktion bzw. deren Kurvenverlauf von der Nitrifikationsphase zur Denitrifikationsphase abgeflacht verläuft, wodurch es möglich ist, zumindest annähernd gleiche Zeiteinheiten für die Behandlungsvorgänge zu erzielen, besonders wenn die weiterlaufende geringe Teilbelüftung im Abklingbereich variabel ist und durch entsprechende Steuerungsmaßnahmen angepaßt werden kann. Die weiterlaufende Teilbelüftung kann etwa dem Minimalwert entsprechen, der erforderlich ist, um ein Verstopfen der im Abwasser befindlichen Begasungsteile, aus denen der Sauerstoff- bzw. Luftsauerstoff austritt, zu verhindern. Es ist dadurch ein intermittierender Betrieb (Nitrifikation/ Denitrifikation) in einem Becken möglich, ohne die Begasungsteile bzw. Sauerstoffeintragsvorrichtungen aus dem Abwasser herausheben zu müssen. Eine solche Betriebsweise ist besonders dann zweckmäßig, wenn die Zeit der Nichtbelüftungsphase durch die Beckenform vorgegeben ist, wenn also die intermittierende Nitrifikation und Denitrifikation des Abwassers in einem Grabenbecken bzw. Oxidationsgraben durchgeführt wird.

Der schematischen Darstellung des beiliegenden Diagramms ist zu entnehmen, daß während des Sauerstoffeintrags ins Abwasser im Anfahrbereich (An) der Nitrifikationsphase N eine Teilzeitmessung Tz der Sauerstoffänderungsfunktion S durchgeführt werden kann. Bei Erreichen eines oberen Grenzwertes G erfolgt eine Konstanthaltung des Sauerstoffanteils im aeroben Bereich Ae. Durch die Teilzeitmessung Tz der Sauerstoffänderungsfunktion S kann die Denitrifikationszeit ermittelt und vorgegeben werden. Am Endpunkt E der Sauerstoffkonstanthaltung erfolgt eine Abschaltung der Sauerstoffbelüftung und es beginnt der Abklingbereich Ab. Auch hier erfolgt eine Teilzeitmessung Tz der Sauerstoffänderungsfunktion S. Die ermittelten Meßdaten werden hochgerechnet, wonach ein der Sauerstoffänderungsfunktion S entsprechendes Zeit-

0069353

glied Z ermittelt und der Denitrifikationsphase D vorgegeben wird. Die Denitrifikationsphase D setzt bei einem Schwellwert Sw ein, der etwa bei 0,5 mg $O_2$ pro Liter Abwasser liegt.

Beim vorliegenden Ausführungsbeispiel ist eine verhältnismäßig große Zehrung im Abwasser gegeben, so daß der Abklingbereich Ab verhältnismäßig steil verläuft. Dabei ist zu erkennen, daß der Kurvenverlauf eine Exponentialfunktion darstellt. Im Bereich der Denitrifikationsphase D verläuft die Zehrung des Sauerstoffanteils immer langsamer. Der gestrichelte Kurvenverlauf bezieht sich auf ein Abwasser, bei dem die Zehrung des Sauerstoffanteils im Abklingbereich Ab langsamer verläuft. Es ist zu erkennen, daß im Bereich der Denitritfikationsphase ausgehend vom Schwellwert die Zehrung des Sauerstoffanteils aufgrund der Exponentialfunktion noch erheblich langsamer verläuft, so daß ein bedeutend längeres Zeitglied für die Denitrifikationsphase durch die erfindungsgemäße Meßsteuerung vorgegeben ist.

TIEDTKE — BÜHLING — KINNE
GRUPE — PELLMANN — GRAMS

- 8 -

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams

Bavariaring 4, Postfach 20 24 0:
8000 München 2
Tel.: 0 89 - 53 96 53
Telex: 5-24 845 tipat
cable: Germaniapatent Münchei

1. Juli 1982
EP 2294

00 69353

P a t e n t a n s p r ü c h e

1. Verfahren zur Behandlung einer Flüssigkeit, insbesondere Abwasser, das durch Steuerung des Sauerstoffanteils einer Nitrifikationsphase und einer Denitrifikationsphase unterworfen wird, dadurch gekennzeichnet, daß mittels einer Sauerstoffmessung im Abwasser die Sauerstoffänderungsfunktion (S) im Abklingbereich (Ab) (Sauerstoffreduktion) der Nitrifikationsphase (N) festgestellt und aus dem Kurvenverlauf bzw. der Charakteristik der Sauerstoffänderungsfunktion (S) ein zugeordneter Zeitbedarf für die Denitrifikationsphase (D) ermittelt und letzterer als bei Erreichung eines Schwellwertes (Sw) des Sauerstoffanteils einsetzendes Zeitglied (Z) vorgegeben wird.

2. Verfahren zur Behandlung einer Flüssigkeit, insbesondere Abwasser, das durch Steuerung des Sauerstoffanteils einer Nitrifikationsphase und einer Denitrifikationsphase unterworfen wird, dadurch gekennzeichnet, daß in einem Anfahrbereich (An) (Sauerstoffzufuhr) der Nitrifikationsphase (N) mittels einer Sauerstoffmessung im Abwasser die Sauerstoffänderungsfunktion (S) festgestellt und aus dem Kurvenverlauf bzw. der Charakteristik der Sauerstoffänderungsfunktion (S) ein zugeordneter Zeitbedarf für die Denitrifikationsphase (D) ermittelt und dieser als bei Beginn ab Erreichung eines Schwellwertes (Sw) des Sauerstoffanteils einsetzendes Zeitglied (Z) vorgegeben wird.

3. Verfahren nach einem der vorstehenden Ansprüche, dadurch gekennzeichnet, daß die Messung bzw. Bestimmung der charakteristischen Sauerstoffänderungsfunktion (S) als begrenzte Teilzeitmessung (Tz) im Abklingbereich (Ab) und/oder Anfahrbereich (An) der Nitrifikationsphase (N) erfolgt.

4. Verfahren nach einem der vorstehenden Ansprüche, dadurch gekennzeichnet, daß der Meßvorgang der Sauerstoffänderungsfunktion (S) im Abklingbereich (Ab) und/oder Anfahrbereich (An) der Nitrifikationsphase (N) zu einem vorbestimmten Zeitpunkt begonnen und nach der vorgegebenen Teilzeit abgebrochen bzw. beendet wird.

5. Verfahren nach einem der vorstehenden Ansprüche, dadurch gekennzeichnet, daß Meßdaten der Sauerstoffänderungsfunktion (S) im Abklingbereich (Ab) und/oder Anfahrbereich (An) der Nitrifikationsphase (N) zeitbedarfsbestimmend elektronisch hochgerechnet werden.

6. Verfahren nach einem der vorstehenden Ansprüche, dadurch gekennzeichnet, daß die Teilzeitmessung (Tz) der Sauerstoffänderungsfunktion (S) im Abklingbereich (Ab) und/oder Anfahrbereich (An) im wesentlichen im Bereich der stärksten Kurvenkrümmung der Sauerstoffänderungsfunktion (S) durchgeführt wird und im Abklingbereich (Ab) vorzugsweise nahe dem bei etwa 0,5 mg $O_2$ pro Liter Abwasser liegenden Schwellwert (Sw) des Sauerstoffanteils erfolgt.

7. Verfahren insbesondere nach einem der vorstehenden Ansprüche, dadurch gekennzeichnet, daß eine Mengenänderungsfunktion einer Abwasserzufuhr in ein Becken mittels einer Mengenmessung festgestellt und daraus ein zugeordneter Zeitbedarf für die Nitrifikationsphase (N) und/oder Denitrifikationsphase (D) sowie dem Anfahrbereich (An) und/oder Abklingbereich (Ab) ermittelt und diesen vorgegeben wird.

8. Verfahren nach einem der vorstehenden Ansprüche, dadurch gekennzeichnet, daß die Messung bzw. Bestimmung der Mengenänderungsfunktion der Abwasserzufuhr ins Becken als kurzzeitige Intervallmessung durchgeführt wird und daß eine zeitbedarfsbestimmende elektronische Hochrechnung der Messdaten für die Nitrifikationsphase (N) und Denitrifikationsphase (D) erfolgt.

9. Verfahren nach einem der vorstehenden Ansprüche, dadurch gekennzeichnet, daß im Abklingbereich (Ab) des Sauerstoffanteils im Abwasser von der Nitrifikationsphase (N) zur Denitrifikationsphase (D) eine im wesentlichen kleine Sauerstoff- bzw. Luftsauerstoffmenge weiterhin ununterbrochen ins Abwasser eingetragen wird.

0069353

Nummer der Anmeldung

EUROPÄISCHER RECHERCHENBERICHT

**Europäisches Patentamt**

EP 82 10 5883

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 159 243 (ENVIROTECH)<br><br>* Spalte 6, Ansprüche 1-3 *<br><br>--- | | C 02 F 3/00<br>C 02 F 3/30 |
| A | EP-A-0 025 597 (A. SCHREIBER)<br><br>--- | | |
| A | DE-A-2 910 015 (A. SCHREIBER)<br><br>* Seiten 1-3; Ansprüche 1-5,8,9 *<br><br>----- | | |

RECHERCHIERTE
SACHGEBIETE (Int. Cl. ³)

C C2 F

Der vorliegende Recherchenbericht wurde für alle Patentansprüche erstellt.

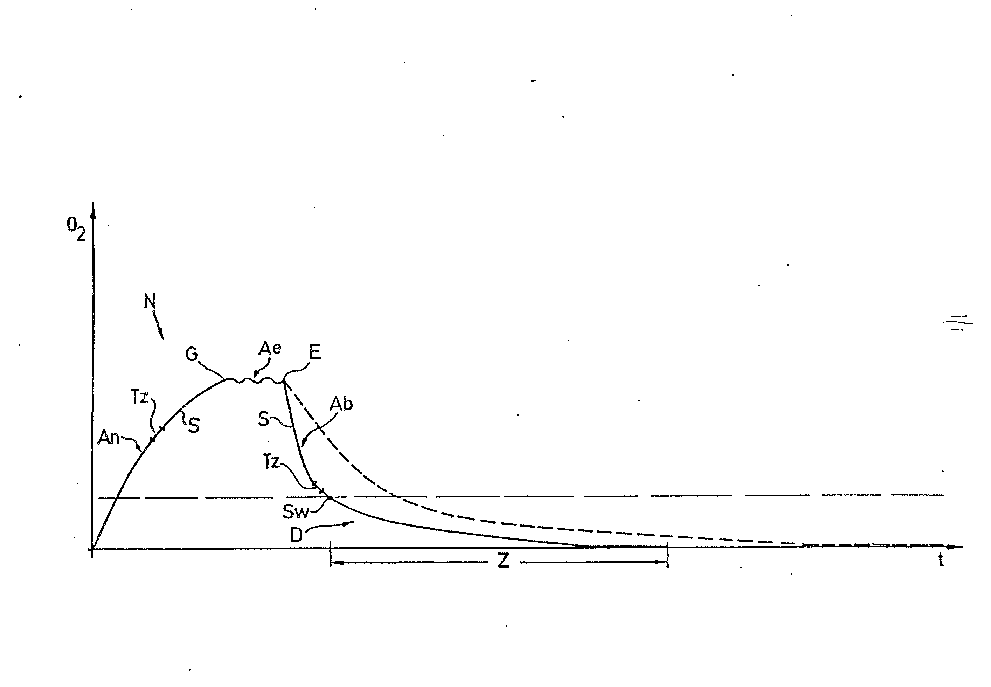

| Recherchenort | Abschlußdatum der Recherche | Prüfer |
|---|---|---|
| DEN HAAG | 05-10-1982 | TEPLY J. |